Europäisches Patentamt

European Patent Office

Office européen des brevets

(19)

(11) Veröffentlichungsnummer: **0 130 404 B1**

# (12) EUROPÄISCHE PATENTSCHRIFT

(45) Veröffentlichungstag der Patentschrift:
26.08.87

(21) Anmeldenummer: 84106440.5

(22) Anmeldetag: 06.06.84

(51) Int. Cl.⁴: **F 28 D 7/00** // F28B1/02, C02F1/06, B01D3/06

(54) **Mehrstufiger Wärmetauscher.**

(30) Priorität: 02.07.83 DE 3323987

(43) Veröffentlichungstag der Anmeldung:
09.01.85 Patentblatt 85/2

(45) Bekanntmachung des Hinweises auf die Patenterteilung:
26.08.87 Patentblatt 87/35

(84) Benannte Vertragsstaaten:
AT BE CH DE FR GB IT LI NL

(56) Entgegenhaltungen:
EP - A - 0 058 386
CH - A - 508 806
DE - A - 2 505 968
DE - B - 1 235 689
GB - A - 1 158 322

(73) Patentinhaber: Balcke-Dürr AG, Homberger
Strasse 2 Postfach 1240, D-4030 Ratingen 1 (DE)

(72) Erfinder: Krips, Herbert, Grabelohstrasse 176,
D-4630 Bochum 7 (DE)
Erfinder: Podhorsky, Miroslan, Dr., Elisabethstrasse 10a,
D-4030 Ratingen (DE)

(74) Vertreter: Patentanwälte Dipl.-Ing. Alex Stenger
Dipl.-Ing. Wolfram Watzke Dipl.-Ing. Heinz J. Ring,
Kaiser-Friedrich-Ring 70, D-4000 Düsseldorf 11 (DE)

## Beschreibung

Die Erfindung betrifft einen mehrstufigen Wärmetauscher mit von einem aufzuwärmenden oder zu kühlenden Medium durchflossenen U-förmigen Rohren, die mit ihren offenen Enden in einer Rohrscheibe befestigt sind und in ein zylinderförmiges Gehäuse hineinragen, das in Richtung seiner Längsachse jeweils durch eine Schottplatte, durch welche die Rohre abgedichtet hindurchgeführt sind, in mindestens zwei voneinander getrennte Räume unterteilt ist, die mit gasförmigen und/oder flüssigen Medien unterschiedlichen Zustands beschickt werden.

Ein derartiger mehrstufiger Wärmetauscher ist der nicht vorveröffentlichten DE-A-3302304 zu entnehmen. Bei diesem zum Kühlen heisser Gase verwendeten Wärmetauscher erfolgt die Unterteilung des zylinderförmigen Gehäuses in insgesamt drei Räume durch zwei in der Art einer Sekante angeordnete Trennwände, die somit in axialer Richtung des zylinderförmigen Gehäuses verlaufen. Die Abdichtung der abgetrennten Räume in radialer Richtung erfolgt durch jeweils eine Trennwand, die die Form eines Kreisabschnittes aufweist.

Aus der DE-B-1235689 ist ein zweistufiger Wärmetauscher mit von einem aufzuwärmenden oder zu kühlenden Medium durchflossenen Rohren und zwei voneinander getrennten Teile der Rohre umgebenden Räumen für gasförmige und/oder flüssige Medien unterschiedlichen Zustands bekannt. Jedes der Rohre ist mit einem Teil seiner Länge in jedem der voneinander getrennten Räume innerhalb eines gemeinsamen Gehäuses angeordnet. Die beiden Räume sind durch eine Schottplatte voneinander getrennt, durch welche die Rohre im Durchtrittsbereich mit ihrer Mantelfläche gegenüber der Schottplatte abgedichtet hindurchgeführt sind. Dieser Wärmetauscher besitzt keine U-förmigen Rohre, die mit ihren offenen Enden in einer einzigen Rohrscheibe befestigt sind.

Schliesslich ist aus der GB-A-1158322 ein einstufiger Wärmetauscher mit in einem zylinderförmigen Gehäuse angeordneten U-förmigen Rohren bekannt, bei dem das eine Medium dem zylindrischen Aussengehäuse über einen Stutzen zugeführt wird. Im Aussengehäuse ist eine zylindrische, teilweise doppelwandige Trennwand angeordnet, die zur Zwangsführung des durch den Stutzen eingeführten und durch einen weiteren Stutzen abgezogenen Mediums führt. Das Medium strömt demzufolge zuerst entlang des äusseren Ringraumes und beaufschlagt hierbei die radial aussenliegenden Schenkel der U-förmigen Rohre. Am Ende des Wärmetauschers wird das Medium umgelenkt und strömt anschliessend in entgegengesetzter Richtung in den zunächst zylindrischen, später ringförmigen Rückströmraum zum Auslassstutzen, wobei die radial innenliegenden Rohrschenkel beaufschlagt werden.

Ausgehend vom Gegenstand der DE-A-3302304 liegt der Erfindung die Aufgabe zugrunde, bei einem mehrstufigen Wärmetauscher der eingangs beschriebenen Art eine vollkommene thermische Symmetrie bei der Beaufschlagung der Rohre und damit eine bestmögliche Spannungsverteilung zu erzielen und eine sichere Abdichtung der voneinander getrennten Kammern zu gewährleisten.

Die Lösung dieser Aufgabenstellung durch die Erfindung ist dadurch gekennzeichnet, dass zwischen den im Gehäuse radial aussenliegenden und den radial innenliegenden Schenkeln ein rohrförmiger Mantel angeordnet ist und dass jede Schottplatte ringförmig ausgebildet und auf den Rohren durch hydraulisches Aufweiten befestigt ist.

Mit diesem Vorschlag ist es möglich, beispielsweise als Hauptkondensatvorwärmer für Dampfkraftwerke eingesetzte Wärmetauscher derart auszubilden, dass sich eine vollkommene thermische Symmetrie bei der Beaufschlagung der Rohre und damit eine bestmögliche Spannungsverteilung ergibt. Bei dem erwähnten Anwendungsfall, bei dem den einzelnen voneinander getrennten Räumen Anzapfdampf aus unterschiedlichen Turbinenstufen zugeführt wird, ist es darüber hinaus erforderlich, die zuerst angeströmten Rohre gegen Erosion zu schützen. Häufig müssen aus diesem Grund die ersten Rohrlagen als Prallschutz ausgebildet und aus erosionsbeständigem Material hergestellt werden. Die erfindungsgemässe Ausbildung ergibt in diesem Zusammenhang den Vorteil, dass die zuerst angeströmten Randrohre der ersten Stufe auch die Randrohre der zweiten Stufe sind und sie somit durchgehend den Erosionsschutz übernehmen. Die erfindungsgemässe Festlegung jeder Schottplatte auf den Rohren durch hydraulisches Aufweiten der Rohre ermöglicht in diesem Zusammenhang eine konstruktiv einfache Befestigung, die unabhängig von der jeweiligen Lage problemlos durchgeführt werden kann.

Selbstverständlich ist es möglich, einen erfindungsgemässen Wärmetauscher nicht nur als zweistufigen Vorwärmer, sondern auch als drei- oder mehrstufigen Vorwärmer auszuführen.

Auf der Zeichnung sind zwei Ausführungsbeispiele des erfindungsgemässen Wärmetauschers dargestellt, und zwar zeigen:

Fig. 1 einen Längsschnitt durch ein Ausführungsbeispiel eines zweistufigen, als Kondensatvorwärmer dienenden Wärmetauschers,

Fig. 2 die Hälfte eines Querschnittes durch den Wärmetauscher in Fig. 1 gemäss der Schnittlinie II–II in Fig. 1,

Fig. 3 einen der Fig. 1 entsprechenden Teilschnitt einer abgewandelten Ausführungsform des Wärmetauschers und

Fig. 4 die Hälfte eines Querschnittes des Wärmetauschers nach Fig. 3 gemäss der Schnittlinie IV–IV in Fig. 3.

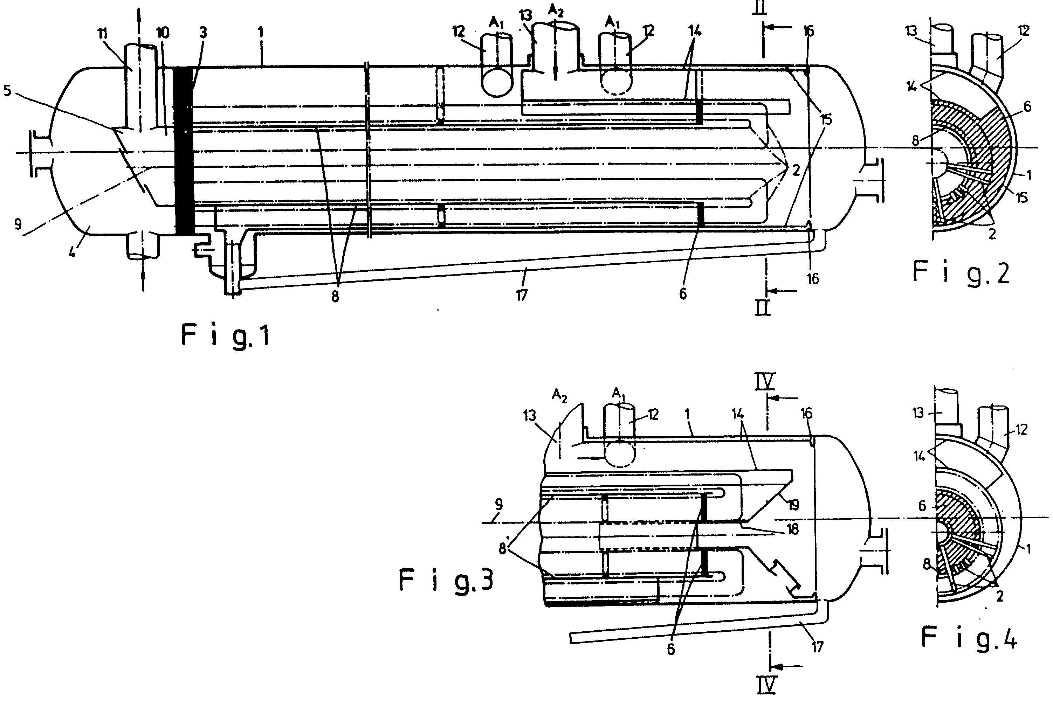

In den Fig. 1 und 2 ist ein erstes praktisches Ausführungsbeispiel eines zweistufigen Wärmetauschers gezeigt, der als Kondensatvorwärmer in Dampfkraftwerken Anwendung findet. In einem zylindrischen Gehäuse 1 ist eine Rohrscheibe 3 druckdicht befestigt, in welcher beide Enden von U-förmig ausgebildeten Rohren 2 angeordnet sind. Die Befestigung der Rohrenden in der Rohrscheibe 3 erfolgt durch hydraulisches Aufweiten. Beim Ausführungsbeispiel liegen beide Enden jedes Rohres 2 im Verhältnis zu einer Mittelachse 9 des Rohrbündels auf einem gemeinsamen Radius mit unterschiedlichem Abstand zur Mittelachse 9, wie dies in Fig. 2 zu erkennen ist. Die radial innenliegenden Enden der Rohre 2 münden in einer allen Rohren 2 gemeinsamen Sammelkammer 5, die durch ein auf die Rohrscheibe 3 aufgesetztes Rohrstück 10 gebildet wird und durch einen Rohrstutzen 11 aus der Verteilkammer 4 herausgeführt wird, wie Fig. 1 erkennen lässt.

Zwischen den radial aussenliegenden und den radial innenliegenden Schenkeln der Rohre 2 ist ein rohrförmiger Mantel 8 angeordnet, der beim Ausführungsbeispiel nahezu über die gesamte Länge der U-förmigen Rohre 2 reicht. Dieser Mantel 8 ist mit seinem einen Ende druckfest mit der Rohrscheibe 3 verbunden. Am anderen Ende des Mantels 8 ist eine ringförmige Schottplatte 6 befestigt, durch welche die radial aussenliegenden Schenkel der Rohre 2 abgedichtet hindurchgeführt sind. Die Abdichtung erfolgt wiederum durch hydraulisches Aufweiten der Rohre 2 in den Bohrungen der Schottplatte 6. Durch den Mantel 8 und die Schottplatte 6 wird der Innenraum des das Rohrbündel aufnehmenden Teils des Gehäuses 1 in zwei voneinander getrennte Räume unterteilt, wobei jeweils ein Teil der Länge der Rohre 2 in dem einen und der restliche Teil der Länge der Rohre 2 im anderen Raum angeordnet sind.

Während der die radial aussenliegenden Schenkel der Rohre 2 enthaltende Raum des Gehäuses 1 durch vier Dampfeintrittsstutzen 12 mit Anzapfdampf $A_1$ beschickt wird, gelangt in denjenigen Raum, der die radial innenliegenden Schenkel, die Rohrbögen und ein kurzes Stück der radial aussenliegenden Schenkel der Rohre 2 enthält, Anzapfdampf $A_2$ durch einen Dampfeintrittsstutzen 13. Um diesen Anzapfdampf $A_2$ in den erwähnten Raum zu leiten, wird ein Überleitungsgehäuse 14 verwendet, welches den durch den Dampfeintrittsstutzen 13 eintretenden Anzapfdampf $A_2$ in der Art eines Kanals durch die Schottplatte 6 hindurch in einen freien Raum führt, der zwischen den Rohrbögen der Rohre 2 und der entsprechenden Stirnseite des Gehäuses 1 gebildet ist.

Um beim Betrieb des Wärmetauschers auftretende, unvermeidbare Wärmedehnungen aufnehmen und das Wärmetauscherbündel ausziehen zu können, ist die Schottplatte 6 mit ihrem radial aussenliegenden Rand nicht unmittelbar am Gehäuse 1 befestigt, sondern an einem Innenmantel 15, der seinerseits mittels eines Dehnungsgliedes 16 gegenüber dem Gehäuse 1 trennbar verbunden ist. Die Fig. 1 zeigt weiterhin eine Kondensatsammelleitung 17 und verschiedene, nicht im einzelnen beschriebene Revisionsöffnungen, die den Zugang zu den einzelnen Teilen des Wärmetauschers ermöglichen.

In den Fig. 3 und 4 ist ein zweites Ausführungsbeispiel eines zweistufigen Wärmetauschers dargestellt, dessen Grundaufbau dem des Wärmetauschers gemäss den Fig. 1 und 2 entspricht, der jedoch eine andere Aufteilung der Rohrlängen besitzt. Wie ein Vergleich insbesondere der Fig. 3 und 1 zeigt, sitzt bei dem Ausführungsbeispiel nach den Fig. 3 und 4 die Schottplatte 6 auf den radial innenliegenden Schenkeln der Rohre 2, so dass bei diesem Ausführungsbeispiel der grössere Teil der Rohre 2 mit Anzapfdampf $A_1$ beaufschlagt wird. Die wiederum am Ende des rohrförmigen Mantels 8 befestigte Schottplatte 6 liegt bei dieser Ausführungsform innerhalb des Mantels 8, so dass die Rohrbögen und ein kurzer Teil der radial innenliegenden Schenkel der Rohre 2 von Anzapfdampf $A_1$ beaufschlagt werden. Der durch den Dampfeintrittsstutzen 13 zugeführte Anzapfdampf $A_2$ gelangt über ein zentrales Rohrstück 18 durch eine die Mittelachse 9 zentrisch umgebende Öffnung in der Schottplatte 6 in den zweiten Raum des Gehäuses 1, wobei dieses Rohrstück 18 über ein trichterförmiges Verbindungsstück 19 mit dem Überleitungsgehäuse 14 bzw. der Innenwand des Gehäuses 1 druckdicht verbunden ist. Auch die Schottplatte 6 ist druckdicht mit dem zentralen Rohrstück 18 verbunden, so dass die mit Anzapfdampf $A_1$ bzw. $A_2$ beschickten Räume innerhalb des Gehäuses 1 vollständig voneinander getrennt sind.

Selbstverständlich ist es möglich, die jeweilige Gesamtlänge der U-förmigen Rohre 2 auf andere Weise als bei den beiden dargestellten Ausführungsbeispielen durch eine Schottplatte 6 zu trennen. In Fig. 1 ist angedeutet, dass die auf den radial aussenliegenden Schenkeln der Rohre 2 befestigte Schottplatte 6 erheblich näher an der Rohrscheibe 3 angeordnet sein kann, wie dies mit gestrichelten Linien angedeutet ist. Die Fig. 3 zeigt, dass eine derartige Verlagerung der Schottplatte 6 auch bei deren Anordnung auf den radial innenliegenden Schenkeln der Rohre 2 möglich ist. In beiden Fällen würde ein kürzerer Mantel 8 verwendet werden; bei der gestrichelt angedeuteten Ausführung in Fig. 3 müsste lediglich das zentrale Rohrstück 18 entsprechend der Verlagerung der Schottplatte 6 in Richtung auf die Rohrscheibe 3 verlängert werden.

Bei sämtlichen Ausführungsformen ist die Druckdifferenz zwischen den einzelnen Kammern relativ klein. Die aus dieser Druckdifferenz resultierenden Kräfte können durch die Rohre 2 leicht von der Schottplatte 6 übernommen werden. Die Stärke der Schottplatten 6 ergibt sich deshalb weniger entsprechend der geforderten Festigkeit als nach fertigungstechnischen Gesichtspunkten.

Bei sämtlichen Ausführungsformen des im einzelnen beschriebenen zweistufigen Wärmetauschers werden die U-förmigen Rohre in ihrer Länge für die einzelnen Druckräume unterteilt, und zwar entsprechend dem jeweils geforderten Flächenverhältnis zwischen den mit Anzapfdampf $A_1$ und den mit Anzapfdampf $A_2$ beaufschlagten Rohrlängen. Da das gesamte Rohrbündel in der beschriebenen Weise in zwei konzentrische Ringe aufgeteilt wird, ergibt sich der Vorteil, dass die Beaufschlagung mit vollkommener thermischer Symmetrie erfolgt und somit eine beste Spannungsverteilung errreicht wird.

### Patentanspruch

Mehrstufiger Wärmetauscher mit von einem aufzuwärmenden oder zu kühlenden Medium durchflossenen U-förmigen Rohren (2), die mit ihren offenen Enden in einer Rohrscheibe (3) befestigt sind und in ein zylinderförmiges Gehäuse (1) hineinragen, das in Richtung seiner Längsachse jeweils durch eine Schottplatte (6), durch welche die Rohre abgedichtet hindurchgeführt sind, in mindestens zwei voneinander getrennte Räume unterteilt ist, die mit gasförmigen und/oder flüssigen Medien unterschiedlichen Zustands beschickt werden, dadurch gekennzeichnet, dass zwischen den im Gehäuse (1) radial aussenliegenden und den radial innenliegenden Schenkeln der Rohre (2) ein rohrförmiger Mantel (8) angeordnet ist und dass jede Schottplatte (6) ringförmig ausgebildet und auf den Rohren (2) durch hydraulisches Aufweiten befestigt ist.

### Claim

A multi-stage heat exchanger comprising U-shaped tubes (2) through which a medium to be heated or to be cooled flows, which tubes are connected by means of their open ends to a tube disc (3) and project into a cylindrical housing (1), which is divided into at least two spaces separated from one another by a respective bulkhead plate (6) through which the tubes are sealingly led, which spaces are charged with gaseous and/or liquid mediums in different states, characterised in that a tubular shield (8) is arranged in the housing (1) between the radially outer lying and the radially inner lying legs of the tubes (2) and in that each bulkhead plate (6) is of annular construction and is connected to the tubes (2) by hydraulic expansion.

### Revendication

Echangeur de chaleur à plusieurs étages avec des tubes en forme de U (2) parcourus par un fluide à réchauffer ou à refroidir, ces tubes étant fixés à leurs extrémités ouvertes dans un plateau à tubes (3) et pénétrant dans une enveloppe cylindrique (1) qui, dans la direction de son axe longitudinal, est divisée par au moins une cloison étanche (6), à travers laquelle les tubes sont guidés de façon étanche, en au moins deux chambres séparées l'une de l'autre, ces chambres étant alimentées avec des fluides gazeux et/ou liquides dans un état différent, caractérisé en ce qu'une chemise tubulaire (8) est disposée entre les branches des tubes (2) situées dans l'enveloppe (1) à l'extérieur et à l'intérieur en direction radiale, et en ce que chaque cloison étanche (6) est constituée avec une forme annulaire et est fixée sur les tubes (2) par évasement hydraulique.

Fig. 1

Fig. 2

Fig. 3

Fig. 4

0130404